# FASCICULE DE BREVET EUROPEEN

(11) **EP 2 589 256 B1**
(45) Date de publication et mention de la délivrance du brevet: **21.08.2019**
(21) Numéro de dépôt: 11741259.3
(22) Date de dépôt: 29.06.2011
(51) Int. Cl.: H04W 76/00

(54) **PROCÉDÉ D'ÉTABLISSEMENT D'UNE LIAISON ENTRE DEUX EQUIPEMENTS DE COMMUNICATION**
VERFAHREN ZUR HERSTELLUNG EINER VERBINDUNG ZWISCHEN ZWEI KOMMUNIKATIONSEINRICHTUNGEN
METHOD FOR ESTABLISHING A LINK BETWEEN TWO COMMUNICATION FACILITIES

(30) Priorité: 30.06.2010 FR 1002748
(43) Date de publication de la demande: 08.05.2013
(73) Titulaire: Transpacific IP Group Limited, Grand Cayman KY1-1001 (KY)
(72) Inventeur: LE CLECH, Fabien, F-92130 Issy Les Moulineaux (FR); JOUNAY, Frédéric, F-22560 Pleumeur Bodou (FR)
(74) Mandataire: Eidelsberg, Olivier Nathan
(86) Numéro de dépôt international: PCT/FR2011/051506
(87) Numéro de publication internationale: WO 2012/001297

(56) Documents cités:
- US-A1- 2008 130 571
- US-A1- 2009 252 088
- US-A1- 2010 027 508
- US-A1- 2010 067 486

## Description

L'invention se situe dans le domaine des télécommunications, et plus particulièrement les réseaux d'accès mobiles.

Le document du 3GPP (3rd Generation Partnership Project), référencé TS 36.300 v.9.3.0 propose des évolutions relatives à des architectures pour le réseau d'accès mobile.

Plus précisément, le document TS 36.300 v.9.3.0 décrit un mécanisme dit ANR (*Automatic Neighbour Relationship* ou relation entre stations de bases voisines). Un tel mécanisme ANR est mis en oeuvre par des stations de base dans le but de découvrir des stations de base voisine. Les stations de base aptes à mettre en oeuvre le mécanisme ANR comprennent des moyens de sélection, parmi une pluralité de stations de base avoisinantes, d'une ou plusieurs stations de base offrant une couverture radio garantissant un niveau de qualité de service satisfaisant et pouvant être des candidates en vue du rattachement d'un terminal mobile lors d'une procédure de changement de cellule de rattachement (*handover*) ou pour échanger des données entre stations de base voisines afin d'optimiser la gestion des ressources radio d'un réseau d'accès mobile. Ainsi, lorsqu'une première station de base sélectionne une deuxième station de base, dite station de base voisine, en mettant en oeuvre le mécanisme ANR, la première station de base en informe un équipement de gestion de la mobilité MME (*Mobility Management Entity*) qui en informe à son tour la deuxième station de base. Une telle solution offre une souplesse dans la sélection par la première station de base, d'une station de base candidate en vu du rattachement d'un terminal mobile lors d'une procédure de mobilité ou lors d'échanges de données entre stations de base.

Une telle solution permet une sélection dynamique de la deuxième station de base. En effet, la sélection de la deuxième station de base est basée sur des mesures de puissance de réception radio rapportées par différents terminaux mobiles rattachés à la première station de base et non pas sur la base de paramétrages effectués lors de la mise en service du réseau de communication mobile.

Les stations de base voisines étant prédéfinies par paramétrage au niveau de la première station de base, le plan de transfert des données est également prédéfini en fonction du paramétrage.

Ainsi, lorsque la première station de base met en oeuvre le mécanisme ANR, le plan de transfert n'est pas adapté. En effet, une station de base considérée comme une voisine de la première station de base lors du paramétrage de cette dernière peut ne pas être une station de base voisine lorsque la première station de base met en oeuvre le mécanisme ANR et inversement. Par conséquent, le plan de transfert des données n'est pas adapté aux besoins des stations de base lorsque celles-ci mettent en oeuvre le mécanisme ANR. Un autre exemple se trouve dans le document US 2008/130571.

Un des buts de l'invention est de remédier à des inconvénients de l'état de l'art.

A cette fin, l'invention propose un procédé d'établissement d'une liaison au niveau de la couche 2 ou 3 OSI au travers de laquelle au moins un flux de données est destiné à être transmis, un premier équipement de communication et un deuxième équipement de communication constituant respectivement une première et une deuxième extrémité de la liaison, une première station de base étant connectée au premier équipement de communication, et une deuxième station de base étant connectée au deuxième équipement de communication, caractérisé en ce que, la première station de base ayant sélectionné en anticipation d'une procédure de mobilité, la deuxième station de base parmi une pluralité de stations de base, le procédé comprend les étapes suivantes mises en oeuvre par le premier équipement de communication :
- extraction d'un identifiant de la première station de base et d'un identifiant de la deuxième station de base compris dans un message émis par la première station de base,
- établissement de la liaison entre le premier équipement de communication et le deuxième équipement de communication à partir de l'identifiant de la première station de base et de l'identifiant de la deuxième station de base extraits.

Une telle solution permet d'adapter le plan de transfert des données aux besoins des stations de bases lorsque ces dernières ont identifié la ou les stations de bases pouvant être des candidates en vu du rattachement d'un terminal mobile lors d'une procédure de mobilité (handover) ou d'échanges de données entre stations de bases voisines. Dans le cadre de l'invention, on entend par liaison, une liaison logique supportée par un lien physique tel qu'une section de fibre optique ou une paire de cuivre. Dans le cadre de l'invention, une liaison est une connectivité de niveau 2 ou de niveau 3 modèle OSI (*Open Systems Interconnection* ou Interconnexion de Systèmes Ouverts) tel que défini par l'ISO (*International Standard Organisation* ou Organisation Internationale de Normalisation). On notera que dans le cadre de l'invention, une station de base est connectée à un équipement de communication par ce type de liaison.

L'établissement d'une liaison destinée à transmettre des données entre une première et une deuxième station de base est déclenché une fois que la deuxième station de base a été sélectionnée comme station de base voisine par la première station de base contrairement aux architectures de l'état de l'art.

On peut aussi noter que dans un deuxième temps le procédé est également mis en oeuvre symétriquement par le deuxième équipement afin d'établir la liaison dans l'autre sens, c'est-à-dire entre le deuxième et le premier équipement.

En effet, la deuxième station de base ayant sélectionné au préalable, parmi une pluralité de stations de base, la première station de base, le procédé comprenant les étapes suivantes mises en oeuvre par le deuxième équipement de communication :
- extraction d'un identifiant de la deuxième station de base et d'un identifiant de la première station de base compris dans un message émis par la deuxième station de base,
- établissement de la liaison entre le deuxième équipement de communication et le premier équipement de communication à partir de l'identifiant de la deuxième station de base et de l'identifiant de la première station de base extraits.

Lorsque le procédé est mis en oeuvre par le premier équipement, la sélection de la deuxième station de base est effectuée par la première station de base sur la base d'informations remontées par le terminal mobile dans le cadre du mécanisme ANR précédemment décrit.

Lorsque le procédé est mis en oeuvre par le deuxième équipement, la sélection de la première station de base est effectuée par la deuxième station de base sur la base d'informations descendues d'un équipement du réseau en charge de la gestion de la mobilité des terminaux mobiles tel qu'un équipement MME.

La solution objet de l'invention permet ainsi d'économiser des ressources du réseau car seules des liaisons destinées à transmettre un flux de données entre deux équipements de communication sont établies évitant une réservation inutile des ressources du réseau contrairement au modèle d'architecture dit architecture maillée (ou *full-mesh* en anglais). Dans un tel modèle d'architecture, des liaisons sont établies entre tous les équipements de communication de sorte que des flux de données peuvent être échangés entre toutes les stations de base consommant alors des ressources du réseau sans que cela soit nécessaire.

La solution objet de l'invention offre également une souplesse dans l'établissement des liaisons puisque celui-ci se fait au besoin, une telle solution présente ainsi un intérêt au cours de l'exploitation du réseau contrairement au modèle d'architecture dit architecture partiellement maillée (ou *partial-mesh* en anglais). Dans un tel modèle d'architecture, des liaisons sont établies entre certains équipements de communication lors de la mise en service du réseau. De telles liaisons sont établies de manière statique de sorte que les ressources associées à ces liaisons sont utilisées même si la liaison devient obsolète au cours de l'exploitation du réseau ou à l'inverse des liaisons ne sont pas établies alors qu'elles s'avèrent utiles. Cette solution implique une relation étroite entre différents équipements du réseau qui doivent mettre à jour leur gestionnaire respectif concernant la topologie du réseau d'accès mobile.

Dans un mode de réalisation de l'invention, le premier équipement de communication intercepte un message émis par la première station de base à destination d'un équipement du réseau en charge de la gestion de la mobilité des terminaux mobiles tel qu'un équipement MME.

Dans un autre mode de réalisation, en plus du message à destination d'un équipement MME, la première station de base émet également un message spécifique à destination du premier équipement de communication.

Selon une caractéristique du procédé d'établissement objet de l'invention, la phase d'établissement de la liaison comprend :
- une étape de diffusion, vers une pluralité d'équipements de communication, de l'identifiant de la première station de base, en tant qu'identifiant d'une route permettant de joindre la première station de base,
- une étape de comparaison d'un identifiant d'une autre station de base, diffusé, vers une pluralité d'équipements de communication incluant le premier équipement de communication, par un autre équipement de communication en tant qu'identifiant d'une route permettant de joindre l'autre station de base, avec l'identifiant de la deuxième station de base extrait,
- dans le cas où l'identifiant de la station de base diffusé est identique à l'identifiant de la deuxième station de base extrait, une étape de mémorisation de l'identifiant de la route permettant de joindre la deuxième station de base.

Le premier équipement de communication diffuse l'identifiant de la première station de base à destination d'autres équipements de communication en vue d'établir une liaison avec un équipement de communication connecté à une station de base pouvant être une candidate en vue du rattachement d'un terminal mobile lors d'une procédure de mobilité ou d'échanges de données entre station de base voisines.

Ainsi, lorsque le premier équipement de communication reçoit un message diffusé par un autre équipement de communication comprenant l'identifiant d'une autre station de base, il compare cet identifiant avec l'identifiant de la deuxième station de base. Si l'identifiant de l'autre station de base compris dans le message diffusé correspond à l'identifiant de la deuxième station de base associé à l'identifiant de la première station de base par le premier équipement de communication, alors l'établissement de la liaison entre le premier et le deuxième équipement de communication est finalisé et la liaison est établie.

Selon une caractéristique du procédé d'établissement objet de l'invention la phase d'établissement de la liaison comprend :
- une étape de création d'un premier point d'attachement dans le premier équipement de communication destiné à constituer la première extrémité de la liaison,
- une étape de détermination d'un identifiant d'un deuxième point d'attachement dans le deuxième équipement de communication destiné à constituer la deuxième extrémité de la liaison,
- une étape d'émission d'une demande d'établissement de la liaison, à destination du deuxième équipement de communication, la demande d'établissement comprenant l'identifiant du premier point d'attachement et l'identifiant du deuxième point d'attachement.

Dans ce mode de réalisation, la liaison destinée à être établie entre le premier et le deuxième équipement de communication est un pseudo-lien tel que défini dans un document de l'IETF (groupe de standardisation de l'Internet, abréviation des termes anglais *Internet Engineering Task Force*), référencé RFC 3985 (RFC signifiant "requête pour commentaires", ou en anglais *Request For Comments*) sous le terme de « *pseudo-wire* », permettent la transmission de paquets de données non-conformes au protocole IP, tels que par exemple des paquets de données conformes au protocole Ethernet.

L'invention concerne encore un procédé de communication entre une station de base et un équipement de communication auquel la station de base est connectée, la station de base sélectionnant parmi une pluralité de stations de base, en anticipation d'une procédure de mobilité, une deuxième station de base connectée à un deuxième équipement de communication, une liaison au niveau de la couche 2 ou 3 OSI au travers de laquelle au moins un flux de données est destiné à être transmis, la liaison étant destinée à être établie entre le premier et le deuxième équipement de communication, caractérisé en ce que le procédé comprend une étape d'émission, à destination du premier équipement de communication, d'un message comprenant un identifiant de la première station de base et un identifiant de la deuxième station de base.

La station de base communique avec le premier équipement au moyen de protocoles tels que le protocole BGP (*Border Gateway Protocol*) qui est un protocole d'échange de routes. De manière classique, la station de base informe le premier équipement de communication de ses préfixes IP. Dans le cadre de l'invention, les messages BGP échangés entre la première station de base et le premier équipement de communication comportent au moins un champ supplémentaire dans lequel est renseigné un identifiant de la première station de base et un identifiant de la deuxième station de base.

On peut noter que ce procédé de communication est également mis en oeuvre symétriquement par la deuxième station de base afin d'établir la liaison dans l'autre sens, c'est-à-dire entre le deuxième et le premier équipement.

L'invention concerne également un équipement de communication constituant une première extrémité d'une liaison au niveau de la couche 2 ou 3 OSI au travers de laquelle au moins un flux de données est destiné à être transmis, un deuxième équipement de communication constituant une deuxième extrémité de la liaison, une première station de base étant connectée à l'équipement de communication, et une deuxième station de base étant connectée au deuxième équipement de communication, caractérisé en ce que, la première station de base ayant sélectionné en anticipation d'une procédure de mobilité, la deuxième station de base parmi une pluralité de stations de base, l'équipement de communication comprend :
- des moyens d'extraction d'un identifiant de la première station de base et d'un identifiant de la deuxième station de base compris dans un message émis par la première station de base,
- des moyens d'établissement de la liaison entre le premier équipement de communication et le deuxième équipement de communication à partir de l'identifiant de la première station de base et de l'identifiant de la deuxième station de base extraits.

Enfin, l'invention a pour objet une station de base, connectée à un premier équipement de communication, sélectionnant parmi une pluralité de stations de base, en anticipation d'une procédure de mobilité, une deuxième station de base connectée à un deuxième équipement de communication, une liaison au niveau de la couche 2 ou 3 OSI au travers de laquelle au moins un flux de données est destiné à être transmis, la liaison étant destinée à être établie entre le premier et le deuxième équipement de communication, caractérisée en ce qu'elle comprend des moyens d'émission, à destination du premier équipement de communication, d'un message comprenant un identifiant de la station de base et un identifiant de la deuxième station de base.

Dans une variante, le message comprend également un paramètre indiquant de l'identifiant de la station de base est destiné à être utilisé pour l'établissement de la liaison.

Selon d'autres aspects, l'invention concerne également des programmes d'ordinateur comprenant des instructions de code de programme pour la mise en oeuvre des étapes des procédés d'établissement et de communication décrits précédemment, lorsque ces programmes sont exécutés par un ordinateur.

Chacun des programmes d'ordinateur décrits ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement lisible par un ordinateur sur lequel est enregistré un programme d'ordinateur tel que décrit précédemment.

Le support d'informations peut être n'importe quelle entité ou dispositif capable de stocker le programme. Par exemple, le support peut comporter un moyen de stockage, tel qu'une ROM (pour *"Read Only Memory*")*,* par exemple un CD ROM ou une ROM de circuit microélectronique, ou encore un moyen d'enregistrement magnétique, par exemple une disquette (*floppy disc*) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

D'autres caractéristiques et avantages apparaîtront à la lecture de modes de réalisation décrits en référence aux dessins dans lesquels :
- la figure 1 représente un réseau d'accès mobile dans lequel le procédé d'établissement et le procédé de communication sont mis en oeuvre,
- la figure 2 représente les étapes du procédé de communication,
- les figures 3A et 3B représentent des messages émis par la station de base à destination de l'équipement de communication,
- la figure 4 représente les étapes du procédé d'établissement,
- la figure 5 représente un diagramme des échanges entre les divers équipements du réseau d'accès mobile dans un premier mode de réalisation,
- la figure 6 représente un diagramme des échanges entre les divers équipements du réseau d'accès mobile dans un deuxième mode de réalisation,
- la figure 7 représente un diagramme des échanges entre les divers équipements du réseau d'accès mobile dans un troisième mode de réalisation,
- la figure 8 représente une station de base mettant en oeuvre le procédé de communication objet de l'invention,
- les figures 9A, 9B, et 9C représentent un équipement de communication mettant en oeuvre le procédé d'établissement objet de l'invention.

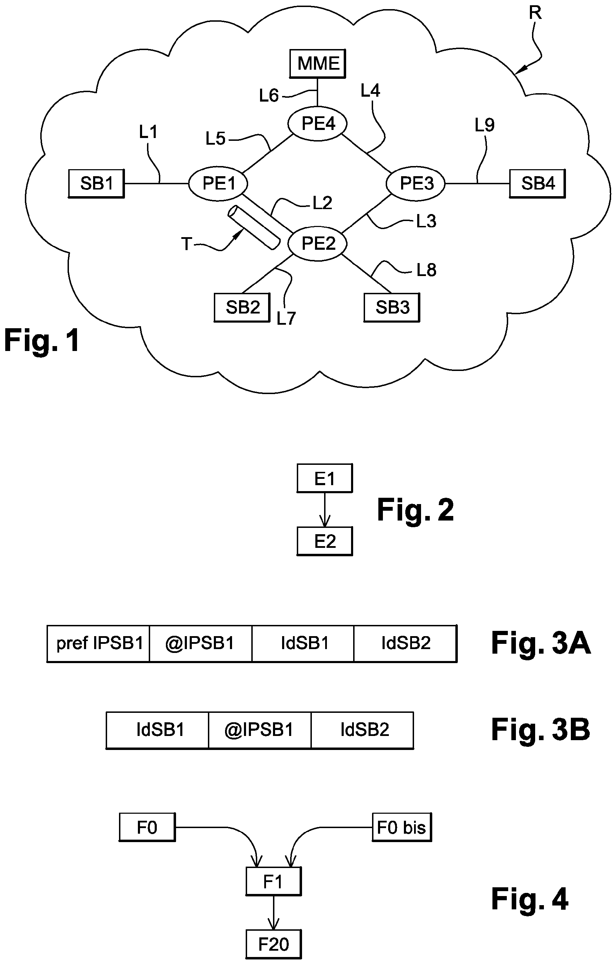

La **figure 1** représente un réseau d'accès mobile R dans lequel les procédés d'établissement et de communication objets de l'invention sont mis en oeuvre.

Un tel réseau d'accès mobile R comprend une pluralité d'équipements de communication PEᵢ, i ∈ {1, 4} connectés entre eux au moyen de liens filaires tels que des paires de cuivre. De tels équipements de communication PEᵢ sont par exemple des routeurs.

Ainsi, un premier équipement de communication PE₁ est connecté par un premier lien L2 à un deuxième équipement de communication PE₂. L'équipement de communication PE₂ est connecté à un troisième équipement PE₃ au moyen d'un lien L3. L'équipement de communication PE₃ est connecté, au moyen d'un lien L4, à un quatrième équipement de communication PE₄. L'équipement PE₄ est connecté à l'équipement PE₁ au moyen d'un lien L5.

Une première station de base SB₁ est connectée à l'équipement de communication PE₁ au moyen d'un lien L1 tel qu'une section de paire de cuivre.

Une deuxième station de base SB₂ est connectée à l'équipement de communication PE₂ au moyen d'un lien L7 tel qu'une section de paire de cuivre.

Une troisième station de base SB₃ est connectée à l'équipement de communication PE₂ au moyen d'un lien L8 tel qu'une section de paire de cuivre.

Une quatrième station de base SB₄ est connectée à l'équipement de communication PE₃ au moyen d'un lien L9 tel qu'une section de paire de cuivre.

Un équipement de gestion de la mobilité MME est connecté à l'équipement de communication PE₄ au moyen d'un lien L6.

Les stations de base SB₁, SB₂, SB₃ et SB₄ mettent en oeuvre le mécanisme ANR de sélection, parmi une pluralité de stations de base avoisinantes, d'une ou plusieurs stations de base, dites stations de base voisines, offrant une couverture radio garantissant un niveau de qualité de service satisfaisant et pouvant être des candidates en vue du rattachement d'un terminal mobile lors d'une procédure de changement de cellule de rattachement (*handover*) ou pour échanger des données entre stations de base voisines afin d'optimiser la gestion des ressources radio d'un réseau d'accès mobile.

En référence à la **figure 2****,** afin de sélectionner une station de base voisine, la station de base SB₁ met en oeuvre le mécanisme ANR. Au cours d'une étape E1, la station de base SB₁ met en oeuvre une étape de sélection d'une station de base voisine parmi des stations de bases SB₂, SB₃, SB₄. A l'issue de l'étape E1, la station de base SB₂ est sélectionnée. La station de base SB₁ connait un identifiant IdSB₂ de la station de base SB₂. Seules les stations de base n'ayant pas déjà été sélectionnées par la première station de base SB₁ et les stations de base dont la sélection au travers du mécanisme ANR n'est pas interdit par l'opérateur gestionnaire du réseau R peuvent être sélectionnées par la station de base SB₁.

Une fois la station de base voisine sélectionnée, la station de base SB₁ émet, au cours d'une étape E2 un message MSG comprenant un identifiant de la première station de base IdSB₁, l'identifiant de la deuxième station de base IdSB₂.

Dans une première variante de réalisation, le message MSG émis par la station de base SB₁ est émis à destination de l'équipement de gestion de la mobilité MME.

Dans une deuxième variante de réalisation, la station de base SB₁ émet, en plus du message MSG, un deuxième message MSG1 à destination de l'équipement de communication PE₁. Un tel message MSG1 est par exemple un message conforme au protocole BGP (*Border Gateway Protocol*). Cependant, un tel message MSG1 comprend des champs supplémentaires par rapport à un message conforme au protocole BGP classique.

Dans une première variante de réalisation représentée à la **figure 3A****,** le message MSG1 comprend dans un premier champ dit NLRI des préfixes IP de la station de base SB₁, dans un deuxième champ dit Next Hop une adresse IP @IP SB₁ choisie parmi les préfixes IP preflP SB₁ de la station de base SB₁, et enfin dans deux nouveaux champs l'identifiant de la première station de base IdSB₁ et l'identifiant de la deuxième station de base IdSB₂.

Dans une deuxième variante de réalisation représentée à la **figure 3B****,** le message MSG1 comprend dans un nouveau champ NLRI l'identifiant IdSB₁ de la station de base SB₁, dans un deuxième champ dit Next Hop une adresse IP @IP SB₁ de la station de base SB₁, et enfin dans un nouveau champ l'identifiant de la deuxième station de base IdSB₂.

Dans une variante de réalisation de l'invention, le message MSG1 peut être un message conforme aux protocoles OSPF (*Open Shortest Path First*), ISIS (*Intermediate system to intermediate system*) ou encore ANCP (Access *Node Control Protocol*). Cependant, un tel message MSG1 comprend un champ supplémentaire par rapport à des messages conformes à ces différents protocoles classiques.

L'équipement de communication PE₁ met alors en oeuvre le procédé d'établissement de la liaison T entre l'équipement de communication PE₁ et l'équipement de communication PE₂.

En référence à la **figure 4****,** l'équipement de communication PE₁ extrait du message MSG, MSG1, émis par la station de base SB1, l'identifiant de la première station de base IdSB₁, l'identifiant de la deuxième station de base IdSB₂ compris dans le message émis par la première station de base SB₁ au cours d'une étape F1.

Une fois ces informations extraites du message MSG, MSG1, émis par la station de base SB₁, l'équipement de communication PE₁ déclenche l'établissement de la liaison T au cours d'une étape F20.

Un tel procédé d'établissement d'une liaison entre un premier équipement de communication PE₁ et un deuxième équipement de communication PE₂ permet d'adapter le plan de transfert des données aux besoins de la station de base SB₁ lorsque cette dernière a identifié la ou les stations de bases pouvant être des candidates en vue du rattachement d'un terminal mobile lors d'une procédure de mobilité. On comprend donc que la station de base SB₁ a sélectionné au moins une autre station de base en anticipation d'une procédure de mobilité.

Dans une première variante de réalisation, l'équipement de communication PE₁ intercepte le message MSG émis par la station de base SB₁ à destination de l'équipement de gestion de la mobilité MME au cours d'une étape F0.

Dans une deuxième variante de réalisation, l'équipement de communication reçoit le message MSG1 émis par la station de base SB₁ au cours d'une étape F0bis.

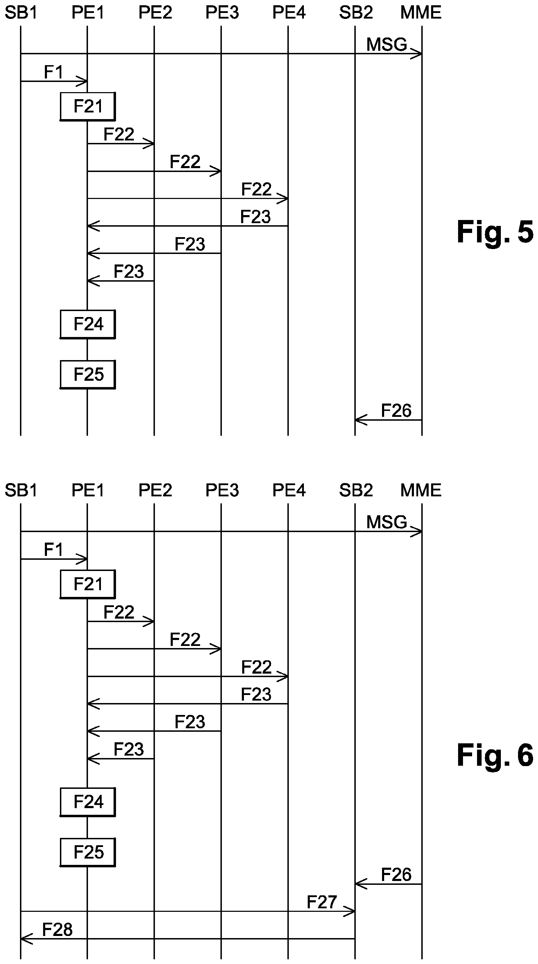

Dans un premier mode de réalisation de l'invention représenté à la **figure 5****,** la liaison T à établir entre l'équipement de communication PE₁ et l'équipement de communication PE₂ est une connectivité IP fournie par un service L3VPN (*Level 3 Virtual Private Networks*) tel que défini dans le document RFC4364. Une telle solution repose sur l'implémentation de la technologie MPLS (*Multi protocol Label Switching*) pour le transport des données entre les deux extrémités de la liaison T. La technologie MPLS propose de rajouter en entête des données à transmettre une ou plusieurs étiquettes contenant des informations permettant aux équipements de communication du réseau R de déterminer le prochain saut que les données doivent effectuer pour atteindre leur destination.

Dans ce premier mode de réalisation de l'invention, l'équipement de communication PE₁ extrait d'un message MSG, MSG1, émis par la station de base SB₁, l'identifiant de la première station de base IdSB₁, l'identifiant de la deuxième station de base IdSB₂ au cours de l'étape F1.

Au cours d'une étape F21, l'équipement de communication PE₁ mémorise l'identifiant IdSB₁ de la station de base SB₁ et l'identifiant IdSB₂ de la station de base SB₂.

Au cours d'une étape F22, l'équipement de communication PE₁ diffuse à destination des équipements de communication PE₂, PE₃ et PE₄, l'identifiant de la première station de base IdSB₁, en tant qu'identifiant d'une route permettant de joindre la première station de base SB₁. Conformément au protocole de routage BGP, un tel identifiant de route est appelé un « Route Target ».

Au cours d'une étape F23, l'équipement de communication PE₁ reçoit, en provenance des équipements de communication PE₂, PE₃, PE₄, les identifiants, respectivement de la station de base IdSB₂, de la station de base IdSB₃, et de la station de base IdSB₄, en tant qu'identifiants de routes permettant respectivement de joindre la station de base SB₂, la station de base SB₃, la station de base SB₄.

Au cours d'une étape F24, l'équipement de communication PE₁ met en oeuvre une étape de comparaison des identifiants des stations de base IdSB₂, IdSB₃, et IdSB₄, reçus au cours de l'étape F23 avec l'identifiant de la deuxième station de base IdSB₂ extrait du message MSG, MSG1.

Dans le cas où l'un des identifiants de stations de base diffusés IdSB₂, IdSB₃ ou Id SB₄ est identique à l'identifiant de la deuxième station de base IdSB₂ extrait du message MSG, MSG1, l'équipement de communication PE1 mémorise au cours d'une étape F25, l'identifiant IdSB₂ de la route permettant de joindre la deuxième station de base SB₂. Cette étape de mémorisation de la route pour atteindre la deuxième station de base SB₂ finalise l'établissement de la liaison T entre le premier équipement de communication PE₁ et le deuxième équipement de communication PE₂.

Parallèlement, la station de base SB₁ émet un message MSG à destination de l'équipement de gestion de la mobilité MME. Le message MSG comprend l'identifiant de la station de base SB₁ et l'identifiant de la station de base SB₂ ainsi qu'une information indiquant que ces deux stations de base SB₁, SB₂ sont voisines.

L'équipement de gestion de la mobilité MME transmet alors un message MSG' à destination de la station de base BS₂ au cours d'une étape F26. Cette étape permet à la deuxième station de base BS₂ d'obtenir l'identifiant IdSB₁ de la première station de base SB₁.

A réception de ce message MSG', les étapes F1 à F25 précédemment décrites sont mises en oeuvre par l'équipement de communication PE₂ afin d'établir la liaison T pour le sens de communication équipement de communication PE₂ vers équipement de communication PE₁ de sorte que la liaison T est bidirectionnelle.

L'acheminement des données au travers de la liaison T étant effectuée selon la technique MPLS, chaque équipement de communication PEᵢ du réseau R est identifié par une étiquette lblᵢ. Cette étiquette lblᵢ permet à n'importe quel équipement de communication PEᵢ d'établir une connectivité selon la technique MPLS avec un autre équipement de communication.

Ainsi, une fois la liaison T établie entre les équipements de communication PE₁ et PE₂, ces derniers échangent leurs étiquettes respectives lbl₁ et Ibl₂. L'étiquette lbl₁ est ajoutée par le deuxième équipement de communication PE₂ en entête des données destinées à être émises vers le premier équipement de communication PE₁ au travers de la liaison T. De même, l'étiquette lbl₂ est ajoutée par le premier équipement de communication PE₁ en entête des données destinées à être émises vers le deuxième équipement de communication PE₂ au travers de la liaison T.

Dans un deuxième mode de réalisation de l'invention représenté à la **figure 6****,** la liaison T à établir entre l'équipement de communication PE₁ et l'équipement de communication PE₂ est une connectivité Ethernet fournie par le service L2VPN BGP (*Level 2 Virtual Private Networks*) tel que défini dans le document RFC4761.

Une telle solution repose également sur l'implémentation de la technologie MPLS pour le transport des données entre les deux extrémités de la liaison T.

Dans ce deuxième mode de réalisation de l'invention, l'équipement de communication PE₁ extrait d'un message MSG, MSG1, émis par la station de base SB₁, l'identifiant de la première station de base IdSB₁, l'identifiant de la deuxième station de base IdSB₂ au cours de l'étape F1.

Au cours d'une étape F21, l'équipement de communication PE₁ mémorise l'identifiant IdSB₁ de la station de base SB₁ et l'identifiant IdSB₂ de la station de base SB₂.

Au cours d'une étape F22, l'équipement de communication PE₁ diffuse à destination des équipements de communication PE₂, PE₃ et PE₄, l'identifiant de la première station de base IdSB₁, en tant qu'identifiant d'une route permettant de joindre la première station de base SB₁. Conformément au protocole de routage BGP, un tel identifiant de route est appelé un « Route Target ». Ainsi, dans ce deuxième mode de réalisation de l'invention, l'identifiant de route utilisé est l'identifiant de la station de base IdSB₁.

Au cours d'une étape F23, l'équipement de communication PE1 reçoit, en provenance des équipements de communication PE₂, PE₃, PE₄, les identifiants, respectivement de la station de base IdSB₂, de la station de base IdSB₃, et de la station de base IdSB₄, en tant qu'identifiant de routes permettant respectivement de joindre la station de base SB₂, la station de base SB₃, la station de base SB₄.

Au cours d'une étape F24, l'équipement de communication PE₁ met en oeuvre une étape de comparaison des identifiants des stations de base IdSB₂, IdSB₃, et IdSB₄, reçus au cours de l'étape F23 avec l'identifiant de la deuxième station de base IdSB₂ extrait du message MSG, MSG1.

Dans le cas où l'un des identifiants de stations de base diffusés IdSB₂, IdSB₃ ou Id SB₄ est identique à l'identifiant de la deuxième station de base IdSB₂ extrait du message MSG, MSG1, l'équipement de communication PE₁ mémorise au cours d'une étape F25, l'identifiant IdSB₂ de la route permettant de joindre la deuxième station de base SB₂. Cette étape de mémorisation de la route pour atteindre la deuxième station de base SB₂ finalise l'établissement de la liaison T entre le premier équipement de communication PE₁ et le deuxième équipement de communication PE₂.

Parallèlement, la station de base SB₁ émet un message MSG à destination de l'équipement de gestion de la mobilité MME. Le message MSG comprend l'identifiant de la station de base SB₁ et l'identifiant de la station de base SB₂ ainsi qu'une information indiquant que ces deux stations de base SB₁, SB₂ sont voisines.

L'équipement de gestion de la mobilité MME transmet alors un message MSG' à destination de la station de base BS₂ au cours d'une étape F26. Cette étape permet à la deuxième station de base BS₂ d'obtenir l'identifiant IdSB₁ de la première station de base SB₁.

A réception de ce message MSG', les étapes F1 à F25 précédemment décrites sont mises en oeuvre par l'équipement de communication PE₂ afin d'établir la liaison T pour le sens de communication équipement de communication PE₂ vers équipement de communication PE₁ de sorte que la liaison T est bidirectionnelle.

L'acheminement des données au travers de la liaison T étant effectuée selon la technique MPLS, chaque équipement de communication PEᵢ du réseau R est identifié par une étiquette Iblᵢ. Cette étiquette Iblᵢ permet à n'importe quel équipement de communication PEᵢ d'établir une connectivité selon la technique MPLS avec un autre équipement de communication.

Ainsi, une fois la liaison T établie entre les équipements de communication PE₁ et PE₂, ces derniers échangent leurs étiquettes respectives Ibl₁ et Ibl₂. L'étiquette Ibl₁ est ajoutée par le deuxième équipement de communication PE₂ en entête des données destinées à être émises vers le premier équipement de communication PE₁ au travers de la liaison T. De même, L'étiquette Ibl₂ est ajoutée par le premier équipement de communication PE₁ en entête des données destinées à être émises vers le deuxième équipement de communication PE₂ au travers de la liaison T.

La liaison T ainsi établie étant une connectivité Ethernet, il est nécessaire afin de pouvoir transmettre des données entre l'équipement de communication PE₁ et l'équipement de communication PE₂ que les stations de base SB₁ et SB₂ s'informent mutuellement de leurs adresses physiques. Une adresse physique est par exemple une adresse de niveau 2 telle qu'une adresse MAC (*Medium Access Controt*).

Pour cela, les stations de base SB₁ et SB₂ échangent au travers de la liaison T des requêtes conformes au protocole ARP (*Address Resolution Protocol*) au cours des étapes F27 et F28 permettant l'apprentissage des adresses MAC des stations de base SB₁ et SB₂. Une fois les adresses physiques des stations de base SB₁ et SB₂ mémorisées par les équipements de communication PE₁ et PE₂ au niveau d'une table VSI (*Virtual Switching Instance*) la transmission des données est possible.

Lors de la transmission de données en provenance de la station de base SB₁ et à destination de la station de base SB₂, l'équipement de communication PE₁ ajoute l'étiquette Ibl₁ en entête des données destinées à être émises à destination de la station de base SB₂ ainsi que l'adresse physique de la station de base SB₂ afin que les données émises soient reçues sur le port de l'équipement de communication PE₂ correspondant à la station de base BS₂.

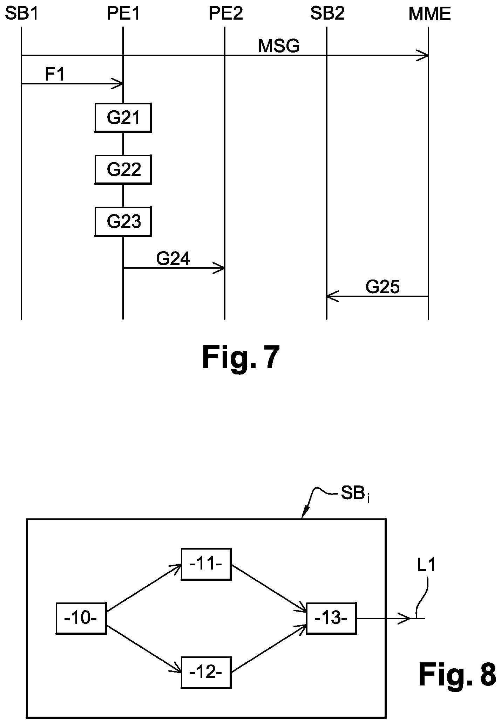

Dans un troisième mode de réalisation de l'invention représenté à la **figure 7****,** la liaison T à établir entre l'équipement de communication PE₁ et l'équipement de communication PE₂ est un pseudo-lien MPLS tel que défini dans le document RFC 3985 sous le terme de « *pseudo-wire »,* permettant une connectivité Ethernet fournie par le service L2VPN LDP (*Level 2 Virtual Private Networks*) tel que défini dans le document RFC 4762.

Dans ce troisième mode de réalisation de l'invention, l'équipement de communication PE₁ extrait d'un message MSG, MSG1, émis par la station de base SB₁, l'identifiant de la première station de base IdSB₁, l'identifiant de la deuxième station de base IdSB₂ au cours de l'étape F1.

Au cours d'une étape G21, l'équipement de communication PE₁ mémorise l'identifiant IdSB₁ de la station de base SB₁ et l'identifiant de la station de base IdSB₂ de la station de base SB₂ voisine.

Au cours d'une étape G22, l'équipement de communication PE₁ crée un premier point d'attachement SAII du pseudo-lien dans le premier équipement de communication PE₁. Un tel point d'attachement a pour identifiant l'identifiant de la station de base IdSB₁.

Au cours d'une étape G23, le premier équipement de communication PE₁ détermine un identifiant d'un deuxième point d'attachement TAII du pseudo-lien dans le deuxième équipement de communication PE₂, un tel identifiant du point d'attachement TAII est l'identifiant de la station de base IdSB₂ compris dans le message MSG, MSG1.

L'établissement du pseudo-lien est à l'initiative du premier équipement de communication PE₁ et repose, par exemple, sur l'échange de demandes d'établissement conformes au protocole T-LDP (*Label Distribution Protocol,* ou protocole de distribution d'étiquette en français) défini dans le document de l'IETF référencé RFC 4447.

Ainsi, une première demande d'établissement SIG1 du pseudo-lien est émise par l'équipement de communication PE₁ à destination de l'équipement de communication PE₂ au cours d'une étape G24. Cette première demande d'établissement SIG1 comporte l'identifiant SAII du premier point d'attachement du pseudo-lien sur l'équipement de communication PE₁, l'identifiant TAII du deuxième point d'attachement du pseudo-lien sur l'équipement de communication PE₂. L'ensemble de ces informations constitue une FEC (*F*o*rwarding Equivalent Class,* ou en français classe équivalente de transfert) identifiant le pseudo-lien T. La demande d'établissement SIG1 comporte également une étiquette Ibl1.

Les SAII et TAII des points d'attachement du pseudo-lien T sur les équipements de communication PE₁, PE₂ permettent de router la demande d'établissement SIG1 entre les équipements de communication PE₁ et PE₂.

Parallèlement, la station de base SB₁ émet un message MSG à destination de l'équipement de gestion de la mobilité MME. Le message MSG comprend l'identifiant de la station de base SB₁ et l'identifiant de la station de base SB₂ ainsi qu'une information indiquant que ces deux stations de base SB₁, SB₂ sont voisines.

L'équipement de gestion de la mobilité MME transmet alors un message MSG' à destination de la station de base BS₂ au cours d'une étape G25. Cette étape permet à la deuxième station de base BS₂ d'obtenir l'identifiant IdSB₁ de la première station de base SB₁.

A réception de ce message MSG', les étapes F1 et G21 à G24 précédemment décrites sont mises en oeuvre par l'équipement de communication PE₂ afin d'établir un pseudo-lien pour le sens de communication équipement de communication PE₂ vers équipement de communication PE₁.

Lors de la transmission de données au travers du pseudo-lien T, l'étiquette Ibl₁ est ajoutée par le deuxième équipement de communication PE₂ en entête des données destinées à être émises vers le premier équipement de communication PE₁. De même, une étiquette Ibl₂ est ajoutée par le premier équipement de communication PE₁ en entête des données destinées à être émises vers le deuxième équipement de communication PE₂.

La **figure 8** représente une station de base SBᵢ mettant en oeuvre le procédé de communication objet de l'invention.

Une telle station de base SBᵢ comprend des moyens de sélection 10 d'une station de base voisine parmi une pluralité de stations de bases avoisinantes conformément à la technique ANR.

Les moyens de sélection 10 sont connectés en entrée de premiers moyens de génération 11 d'un message MSG destiné à être transmis à l'équipement de gestion de la mobilité MME.

Les moyens de sélection 10 sont également connectés en entrée de deuxièmes moyens de génération 12 d'un message MSG1 destiné à être transmis à l'équipement de communication PEᵢ auquel la station de base SBᵢ est connectée.

Les premiers moyens de génération 11 et les deuxièmes moyens de génération 12 sont connectés en entrée de moyens d'émission 13 des messages MSG et MSG1 au travers de la liaison L1.

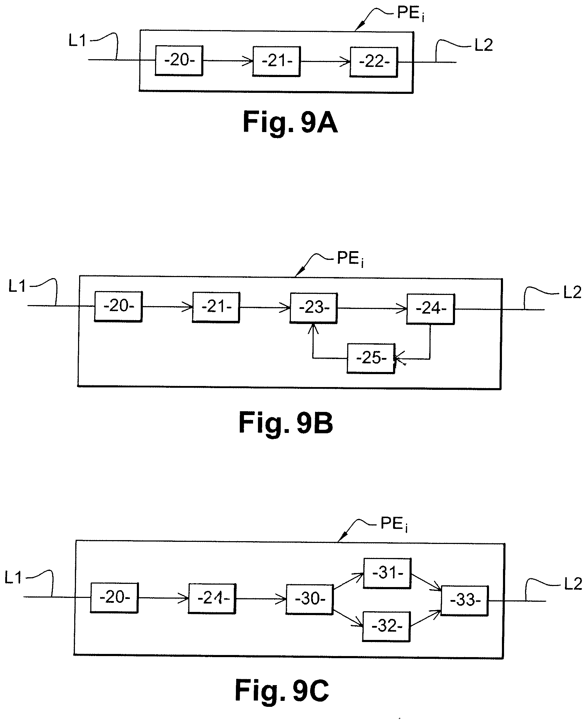

La **figure 9A** représente un équipement de communication PEᵢ mettant en oeuvre le procédé d'établissement objet de l'invention.

Un tel équipement de communication PEᵢ comprend des moyens de réception ou d'interception 20 d'un message MSG, MSG1 émis par la station de base SBᵢ connectée à l'équipement de communication PEᵢ.

Les moyens de réception ou d'interception 20 sont connectés en entrée de moyens d'extraction 21 de l'identifiant de la station de base IdSBᵢ connectée à l'équipement de communication PEᵢ, et l'identifiant de la station de base voisine IdSBᵥₒᵢₛᵢₙₑ.

Les moyens d'extraction 21 sont connectés en entrée de moyens 22 d'établissement d'une liaison T entre l'équipement de communication PEi et l'équipement de communication PEᵥₒᵢₛᵢₙ auquel est connectée la station de base voisine SBᵥₒᵢₛᵢₙₑ.

La **figure 9B** représente un équipement de communication conforme au premier et deuxième modes de réalisation de l'invention.

Un tel équipement de communication PEᵢ comprend des moyens de réception ou d'interception 20 d'un message MSG, MSG1 émis par la station de base SBᵢ connectée à l'équipement de communication PEᵢ.

Les moyens de réception ou d'interception 20 sont connectés en entrée de moyens d'extraction 21 de l'identifiant de la station de base IdSBᵢ connectée à l'équipement de communication PEᵢ, et l'identifiant de la station de base voisine IdSBᵥₒᵢₛᵢₙₑ.

Les moyens d'extraction 21 sont connectés en entrée de moyens de mémorisation 23 de l'identifiant de la station de base IdSBᵢ et l'identifiant de la station de base voisine IdSBᵥₒᵢₛᵢₙₑ.

Les moyens de mémorisation 23 sont connectés en entrée de moyens de diffusion/réception 24 apte à diffuser, à destination d'autres équipements de communication, l'identifiant de la station de base IdSBᵢ, en tant qu'identifiant d'une route permettant de joindre la première station de base SBᵢ.

Les moyens de diffusion/réception 24 sont également aptes à recevoir en provenance des autres équipements de communication les identifiants des stations de base connectées à chacun d'entre eux, en tant qu'identifiant de routes permettant de les joindre.

Les moyens de diffusion/réception 24 sont connecté en entrée de moyens de comparaison 25 des identifiants des stations de base reçus par les moyens de diffusion/réception 24 avec l'identifiant de la station de base IdSBᵥₒᵢₛᵢₙₑ mémorisé dans les moyens de mémorisation 23.

Dans le cas où l'un des identifiants de stations de base diffusés est identique à l'identifiant de la station de base IdSBᵥₒᵢₛᵢₙₑ extrait, l'équipement de communication PEᵢ mémorise dans les moyens de mémorisation 23 l'identifiant IdSBᵥₒᵢₛᵢₙₑ de la route permettant de joindre la station de base SBᵥₒᵢₛᵢₙₑ.

La **figure 9C** représente un équipement de communication conforme au troisième mode de réalisation de l'invention.

Un tel équipement de communication PEᵢ comprend des moyens de réception ou d'interception 20 d'un message MSG, MSG1 émis par la station de base SBᵢ connectée à l'équipement de communication PE₁.

Les moyens de réception ou d'interception 20 sont connectés en entrée de moyens d'extraction 21 de l'identifiant de la station de base IdSBᵢ connectée à l'équipement de communication PEᵢ, et l'identifiant de la station de base voisine IdSBᵥₒᵢₛᵢₙₑ.

Les moyens d'extraction 21 sont connectés en entrée de moyens de mémorisation 30 de l'identifiant de la station de base IdSBᵢ et l'identifiant de la station de base voisine IdSBᵥₒᵢₛᵢₙₑ.

Les moyens de mémorisation 30 sont connectés en entrée de moyens de création 31 d'un premier point d'attachement SAII du pseudo-lien dans l'équipement de communication PE₁. Un tel point d'attachement a pour identifiant l'identifiant de la station de base IdSBᵢ.

Les moyens de mémorisation 30 sont également connectés en entrée de moyens de détermination 32 d'un identifiant d'un point d'attachement TAII du pseudo-lien dans l'équipement de communication PEᵥₒᵢₛᵢₙ, un tel identifiant du point d'attachement TAII est l'identifiant de la station de base IdSBᵥₒᵢₛᵢₙₑ compris dans le message MSG, MSG1.

Les moyens de création 31 et les moyens de détermination 32 sont connectés en entrée de moyens d'émission 34 d'une demande d'établissement d'un pseudo-lien T.

## Revendications

1. Procédé d'établissement d'une liaison (T) au niveau de la couche 2 ou 3 OSI au travers de laquelle au moins un flux de données est destiné à être transmis, un premier routeur (PE1) et un deuxième routeur (PE2) d'un même réseau d'accès mobile constituant respectivement une première et une deuxième extrémité de la liaison, une première station de base (SB1) étant connectée au premier routeur, et une deuxième station de base (SB2) étant connectée au deuxième routeur, **caractérisé en ce que**, la première station de base ayant sélectionné, sur la base de mesures de puissance de réception radio rapportées par au moins un terminal mobile lui étant rattaché, et en anticipation d'une procédure de handover, la deuxième station de base parmi une pluralité de stations de base, le procédé comprend les étapes suivantes mises en oeuvre par le premier routeur en anticipation de la procédure de handover:
- extraction (F1) d'un identifiant (IdSB1) de la première station de base et d'un identifiant (IdSB2) de la deuxième station de base compris dans un message émis par la première station de base,
- établissement de la liaison entre le premier routeur et le deuxième routeur à partir de l'identifiant de la première station de base et de l'identifiant de la deuxième station de base extraits, la phase d'établissement de la liaison comprenant, en anticipation de la procédure de handover:
- une étape de création (G22) d'un premier point d'attachement dans le premier routeur destiné à constituer la première extrémité de la liaison,
- une étape de détermination (G23) d'un identifiant d'un deuxième point d'attachement dans le deuxième routeur destiné à constituer la deuxième extrémité de la liaison,
- une étape d'émission (G24) d'une demande d'établissement de la liaison, à destination du deuxième routeur, la demande d'établissement comprenant l'identifiant du premier point d'attachement et l'identifiant du deuxième point d'attachement.

2. Procédé d'établissement selon la revendication 1, dans lequel la phase d'établissement de la liaison comprend :
- une étape de diffusion (F22), vers une pluralité de routeurs, de l'identifiant de la première station de base, en tant qu'identifiant d'une route permettant de joindre la première station de base,
- une étape de comparaison (F24) d'un identifiant d'une autre station de base, diffusé vers une pluralité de routeurs incluant le premier routeur, par un autre routeur en tant qu'identifiant d'une route permettant de joindre l'autre station de base, avec l'identifiant de la deuxième station de base extrait,
- dans le cas où l'identifiant de la station de base diffusé est identique à l'identifiant de la deuxième station de base extrait, une étape de mémorisation (F25) de l'identifiant de la route permettant de joindre la deuxième station de base.

3. Procédé de communication entre une station de base (SB1) et un routeur (PE1) auquel la station de base est connectée, la station de base sélectionnant parmi une pluralité de stations de base, en anticipation d'une procédure de handover, une deuxième station de base (SB2) connectée à un deuxième routeur (PE2), une liaison (T) au niveau de la couche 2 ou 3 OSI au travers de laquelle au moins un flux de données est destiné à être transmis, la liaison étant destinée à être établie entre le premier et le deuxième routeur, **caractérisé en ce que** le procédé comprend une étape d'émission (F1), à destination du premier routeur, d'un message comprenant un identifiant (IdSB1) de la première station de base et un identifiant (IdSB2) de la deuxième station de base, ces identifiants étant destinés à être extraits par le premier routeur afin de lui permettre, en anticipation de la procédure de handover, de :
- créer un premier point d'attachement dans le premier routeur, destiné à constituer une première extrémité de la liaison,
- déterminer un identifiant du deuxième point d'attachement dans le deuxième routeur, destiné à constituer une deuxième extrémité de la liaison,
- émettre une demande d'établissement de la liaison, à destination du deuxième routeur, la demande d'établissement comprenant l'identifiant du premier point d'attachement et l'identifiant du deuxième point d'attachement.

4. Routeur (PE1) constituant une première extrémité d'une liaison (T) au niveau de la couche 2 ou 3 OSI au travers de laquelle au moins un flux de données est destiné à être transmis, un deuxième routeur (PE2) constituant une deuxième extrémité de la liaison, une première station de base (SB1) étant connectée au routeur, et une deuxième station de base (SB2) étant connectée au deuxième routeur, **caractérisé en ce que**, la première station de base ayant sélectionné, sur la base de mesures de puissance de réception radio rapportées par au moins un terminal mobile lui étant rattaché, et en anticipation d'une procédure de handover, la deuxième station de base parmi une pluralité de stations de base, le routeur comprend :
- des moyens d'extraction d'un identifiant de la première station de base et d'un identifiant de la deuxième station de base compris dans un message émis par la première station de base,
- des moyens d'établissement de la liaison entre le routeur et le deuxième routeur à partir de l'identifiant de la première station de base et de l'identifiant de la deuxième station de base extraits, ces moyens étant aptes à, en anticipation de la procédure de handover :
- créer un premier point d'attachement dans le premier routeur destiné à constituer la première extrémité de la liaison,
- déterminer un identifiant d'un deuxième point d'attachement dans le deuxième routeur destiné à constituer la deuxième extrémité de la liaison,
- émettre une demande d'établissement de la liaison, à destination du deuxième routeur, la demande d'établissement comprenant l'identifiant du premier point d'attachement et l'identifiant du deuxième point d'attachement.

5. Station de base (SB1), connectée à un premier routeur (PE1), sélectionnant parmi une pluralité de stations de base, en anticipation d'une procédure de handover, une deuxième station de base (SB2) connectée à un deuxième routeur (PE2), une liaison (T) au niveau de la couche 2 ou 3 OSI au travers de laquelle au moins un flux de données est destiné à être transmis, la liaison étant destinée à être établie entre le premier et le deuxième routeur, **caractérisée en ce qu'**elle comprend des moyens d'émission, à destination du premier routeur, d'un message comprenant un identifiant (IdSB1) de la station de base et un identifiant (IdSB2) de la deuxième station de base, ces identifiants étant destinés à être extraits par le premier routeur afin de lui permettre, en anticipation de la procédure de handover, de :
- créer un premier point d'attachement dans le premier routeur, destiné à constituer une première extrémité de la liaison,
- déterminer un identifiant du deuxième point d'attachement dans le deuxième routeur, destiné à constituer une deuxième extrémité de la liaison,
- émettre une demande d'établissement de la liaison, à destination du deuxième routeur, la demande d'établissement comprenant l'identifiant du premier point d'attachement et l'identifiant du deuxième point d'attachement.

6. Programme d'ordinateur comprenant des instructions de code de programme pour la mise en oeuvre des étapes du procédé d'établissement selon la revendication 1 lorsque le programme est exécuté par un processeur.

7. Support d'enregistrement lisible par un équipement commutateur sur lequel est enregistré le programme selon la revendication 6.

8. Programme d'ordinateur comprenant des instructions de code de programme pour la mise en oeuvre des étapes du procédé de communication selon la revendication 3 lorsque le programme est exécuté par un processeur.

9. Support d'enregistrement lisible par un équipement commutateur sur lequel est enregistré le programme selon la revendication 8.

## Patentansprüche

1. Verfahren zum Herstellen einer Verbindung (T) auf Ebene der Schicht 2 oder 3 OSI, durch die mindestens ein Datenfluss dazu bestimmt ist, übertragen zu werden, wobei ein erster Router (PE1) und ein zweiter Router (PE2) eines gleichen Funkzugangsnetzes jeweils ein erstes und ein zweites Ende der Verbindung bilden, wobei eine erste Basisstation (SB1) an den ersten Router angeschlossen wird, und wobei eine zweite Basisstation (SB2) an den zweiten Router angeschlossen wird, **dadurch gekennzeichnet, dass**, nachdem die erste Basisstation auf der Grundlage von Messungen der Stärke des Funkempfangs, die durch mindestens ein mobiles Endgerät gemeldet werden, das mit ihr verbunden ist, und im Vorgriff auf ein Handover-Verfahren die zweite Basisstation unter mehreren Basisstationen ausgewählt hat, das Verfahren die folgenden Schritte aufweist, die durch den ersten Router im Vorgriff auf das Handover-Verfahren umgesetzt werden:
- Extrahieren (F1) einer Kennung (IdSB1) der ersten Basisstation und einer Kennung (IdSB2) der zweiten Basisstation, die in der Nachricht enthalten ist, die von der ersten Basisstation gesendet wird,
- Herstellen der Verbindung zwischen dem ersten Router und dem zweiten Router ausgehend von der Kennung der ersten Basisstation und der Kennung der zweiten Basisstation, die extrahiert werden, wobei die Phase des Herstellens der Verbindung im Vorgriff auf das Handover-Verfahren aufweist:
- einen Schritt des Erstellens (G22) eines ersten Verbindungspunktes in dem ersten Router, der dazu bestimmt ist, das erste Ende der Verbindung zu bilden,
- einen Schritt des Bestimmens (G23) einer Kennung eines zweiten Verbindungspunktes in dem zweiten Router, der dazu bestimmt ist, das zweite Ende der Verbindung zu bilden,
- einen Schritt des Sendens (G24) einer Anfrage zum Herstellen der Verbindung an den zweiten Router, wobei die Anfrage zum Herstellen die Kennung des ersten Verbindungspunktes und die Kennung des zweiten Verbindungspunktes aufweist.

2. Verfahren zum Herstellen nach Anspruch 1, wobei die Phase des Herstellens der Verbindung aufweist:
- einen Schritt des Weiterleitens (F22) der Kennung der ersten Basisstation an mehrere Router als Kennung einer Route, die ermöglicht, die erste Basisstation zu erreichen,
- einen Schritt des Vergleichens (F24) einer Kennung einer anderen Basisstation, die an mehrere Router einschließlich dem ersten Router durch einen anderen Router als Kennung einer Route weitergeleitet wird, die ermöglicht, die andere Basisstation zu erreichen, mit der extrahierten Kennung der zweiten Basisstation,
- in dem Fall, in dem die weitergeleitete Kennung der Basisstation mit der extrahierten Kennung der zweiten Basisstation identisch ist, einen Schritt des Speicherns (F25) der Kennung der Route, die ermöglicht, die zweite Basisstation zu erreichen.

3. Kommunikationsverfahren zwischen einer Basisstation (SB1) und einem Router (PE1), an den die Basisstation angeschlossen wird, wobei die Basisstation aus mehreren Basisstationen im Vorgriff auf ein Handover-Verfahren eine zweite Basisstation (SB2), die an einen zweiten Router (PE2) angeschlossen wird, eine Verbindung (T) auf Ebene der Schicht 2 oder 3 OSI auswählt, durch die mindestens ein Datenfluss dazu bestimmt ist, übertragen zu werden, wobei die Verbindung dazu bestimmt ist, zwischen dem ersten und dem zweiten Router hergestellt zu werden, **dadurch gekennzeichnet, dass** das Verfahren einen Schritt des Sendens (F1) einer Nachricht an den ersten Router aufweist, die eine Kennung (IdSB1) der ersten Basisstation und eine Kennung (IdSB2) der zweiten Basisstation aufweist, wobei diese Kennungen dazu bestimmt sind, durch den ersten Router extrahiert zu werden, um ihm zu ermöglichen, im Vorgriff auf ein Handover-Verfahren:
- einen ersten Verbindungspunkt in dem ersten Router zu erstellen, der dazu bestimmt ist, ein erstes Ende der Verbindung zu bilden,
- eine Kennung des zweiten Verbindungspunktes in dem zweiten Router zu bestimmen, der dazu bestimmt ist, das zweite Ende der Verbindung zu bilden,
- eine Anfrage zum Herstellen der Verbindung an den zweiten Router zu senden, wobei die Anfrage zum Herstellen die Kennung des ersten Verbindungspunktes und die Kennung des zweiten Verbindungspunktes aufweist.

4. Router (PE1), der ein erstes Ende einer Verbindung (T) auf Ebene der Schicht 2 oder 3 OSI bildet, durch die mindestens ein Datenfluss dazu bestimmt ist, übertragen zu werden, wobei ein zweiter Router (PE2) ein zweites Ende der Verbindung bildet, wobei eine erste Basisstation (SB1) an den ersten Router angeschlossen wird, und wobei eine zweite Basisstation (SB2) an den zweiten Router angeschlossen wird, **dadurch gekennzeichnet, dass**, nachdem die erste Basisstation auf der Grundlage von Messungen der Stärke des Funkempfangs, die durch mindestens ein mobiles Endgerät gemeldet werden, das mit ihr verbunden ist, und im Vorgriff auf ein Handover-Verfahren die zweite Basisstation unter mehreren Basisstationen ausgewählt hat, der Router aufweist:
- Mittel zum Extrahieren einer Kennung der ersten Basisstation und einer Kennung der zweiten Basisstation, die in der Nachricht enthalten ist, die von der ersten Basisstation gesendet ist,
- Mittel zum Herstellen der Verbindung zwischen dem ersten Router und dem zweiten Router ausgehend von der Kennung der ersten Basisstation und der Kennung der zweiten Basisstation, die extrahiert sind, wobei diese Mittel geeignet sind, im Vorgriff auf das Handover-Verfahren:
- einen ersten Verbindungspunkt in dem ersten Router zu erstellen, der dazu bestimmt ist, das erste Ende der Verbindung zu bilden,
- eine Kennung eines zweiten Verbindungspunktes in dem zweiten Router zu bestimmen, der dazu bestimmt ist, das zweite Ende der Verbindung zu bilden,
- eine Anfrage zum Herstellen der Verbindung an den zweiten Router zu senden, wobei die Anfrage zum Herstellen die Kennung des ersten Verbindungspunktes und die Kennung des zweiten Verbindungspunktes aufweist.

5. Basisstation (SB1), die an einen Router (PE1) angeschlossen ist, die aus mehreren Basisstationen im Vorgriff auf ein Handover-Verfahren eine zweite Basisstation (SB2), die an einen zweiten Router (PE2) angeschlossen ist, eine Verbindung (T) auf Ebene der Schicht 2 oder 3 OSI auswählt, durch die mindestens ein Datenfluss dazu bestimmt ist, übertragen zu werden, wobei die Verbindung dazu bestimmt ist, zwischen dem ersten und dem zweiten Router hergestellt zu werden, **dadurch gekennzeichnet, dass** sie Mittel zum Senden einer Nachricht an den ersten Router aufweist, die eine Kennung (IdSB1) der ersten Basisstation und eine Kennung (IdSB2) der zweiten Basisstation aufweist, wobei diese Kennungen dazu bestimmt sind, durch den ersten Router extrahiert zu werden, um ihm zu ermöglichen, im Vorgriff auf das Handover-Verfahren:
- einen ersten Verbindungspunkt in dem ersten Router zu erstellen, der dazu bestimmt ist, ein erstes Ende der Verbindung zu bilden,
- eine Kennung des zweiten Verbindungspunktes in dem zweiten Router zu bestimmen, der dazu bestimmt ist, das zweite Ende der Verbindung zu bilden,
- eine Anfrage zum Herstellen der Verbindung an den zweiten Router zu senden, wobei die Anfrage zum Herstellen die Kennung des ersten Verbindungspunktes und die Kennung des zweiten Verbindungspunktes aufweist.

6. Computerprogramm, umfassend Programmcodebefehle für das Umsetzen der Schritte des Verfahrens zum Herstellen nach Anspruch 1, wenn das Programm von einem Prozessor ausgeführt wird.

7. Aufzeichnungsmedium, das von einem Schaltgerät lesbar ist, auf dem das Programm nach Anspruch 6 aufgezeichnet ist.

8. Computerprogramm, umfassend Programmcodebefehle für das Umsetzen der Schritte des Kommunikationsverfahrens nach Anspruch 3, wenn das Programm von einem Prozessor ausgeführt wird.

9. Aufzeichnungsmedium, das von einem Schaltgerät lesbar ist, auf dem das Programm nach Anspruch 8 aufgezeichnet ist.

## Claims

1. A method for establishing a link (T) in an Open Systems Interconnection (OSI) layer 2 or 3 via which at least one date stream is intended to be transmitted, a first unit (PE1) of communications equipment and a second unit (PE2) of communications equipment of a same mobile access network respectively forming a first and a second end of the link, a first base station (SB1) being connected to the first unit of communications equipment, and a second base station (SB2) being connected to the second unit of communications equipment, **characterized in that** the first base station having selected the second base station from amongst a plurality of base stations on the basis of radio receiving power measures provided by at least one mobile terminal attached thereto and, in anticipation of an handover procedure, the method comprising the following steps implemented by the first unit of communications equipment, in anticipation of an handover procedure:
- extracting (F1) an identifier (IdSB1) of the first base station and an identifier (IdSB2) of the second base station comprised in a message transmitted by the first base station,
- establishing the link between the first unit of communications equipment and the second unit of communications equipment based on the identifier of the first base station and on the identifier of the second base station extracted, the step of establishing the link comprising, in anticipation of the handover procedure,
- a creating step (G22) of a first point of attachment in the first unit of communications equipment intended to form the first end of the link,
- a determining step (G23) of an identifier of a second point of attachment in the second unit of communications equipment intended to form the second end of the link,
- a sending step (G24) of a request for establishing the link to the second unit of communications equipment, the request for establishing the link comprising the identifier of the first point of attachment and the identifier of the second point of attachment.

2. The method for establishing a link as claimed in claim 1, wherein establishing the link comprises:
- a broadcasting step (F22), to a plurality of communications equipment, of the identifier of the first base station as an identifier of a route allowing a connection to the first base station,
- a comparing (F24) step of an identifier of another base station, broadcasted to a plurality of communications equipment including the first unit of communications equipment, by another unit of communications equipment by another unit of communications equipment as an identifier of a route allowing a connection to the other base station, with the identifier of the second base station extracted,
- wherein when the identifier of the base station broadcast is identical to the identifier of the second base station extracted, a storing step (F25) of the identifier of the route allowing a connection to the second base station.

3. A method of communication between a base station (SB1) and a unit (PE1) of communications equipment to which the base station is connected, the base station selecting from amongst a plurality of base stations, in anticipation of an handover procedure, a second base station (SB2) connected to a second unit (PE2) of communication equipment, a link (T) in the Open Systems Interconnection (OSI) layer 2 or 3 via which at least one date stream is intended to be transmitted, the link being intended to be established between the first and a second unit of communications equipment, **characterized in that** the method comprises sending a message (F1) to the first unit of communications equipment, the message comprising an identifier (IdSB1) of the first base station and an identifier (IdSB2) of the second base station, these identifiers being destined to be extracted by the first unit of communications equipment to allow, in anticipation of the handover procedure, to:
- create a first point of attachment in the first unit of communications equipment intended to form the first end of the link,
- determine an identifier of a second point of attachment in the second unit of communications equipment intended to form a second end of the link,
- send a request for establishing the link to the second unit of communications equipment, the request for establishing the link comprising the identifier of the first point of attachment and the identifier of the second point of attachment.

4. A unit (PE1) of communications equipment forming a first end of a link (T) in the Open Systems Interconnection (OSI) layer 2 or 3 via which at least one data stream is intended to be transmitted, a second unit (PE2) of communications equipment forming a second end of a link, a first base station (SB1) being connected to the unit of communications equipment, and a second base station (SB2) being connected to the second unit of communications equipment, **characterized in that** the first base station having selected, on the basis of radio receiving power measures, provided by at least one mobile terminal attached thereto, and in anticipation of an handover procedure, the second base station amongst a plurality of base stations, wherein the unit of communications equipment comprises:
- extract means of an identifier of the first base station and an identifier of the second base station comprised in a message transmitted by the first base station,
- establishing means of the link between the unit of communications equipment and the second unit of communications equipment based on the identifier of the first base station and on the identifier of the second base station extracted, these means being able to, in anticipation of an handover procedure,
- to create a first point of attachment in the first unit of communications equipment intended to form the first end of the link,
- to determine an identifier of a second point of attachment in the second unit of communications equipment intended to form the second end of the link,
- to send a request for establishing the link to the second unit of communications equipment, the request for establishing the link comprising the identifier of the first point of attachment and the identifier of the second point of attachment.

5. A base station (SB1), connected to a first unit (PE1) of communications equipment and selected from amongst a plurality of base stations, in anticipation of an handover procedure, a second base station (SB2) connected to a second unit (PE2) of communications equipment, a link (T) in the Open Systems Interconnection (OSI) layer 2 or 3 via which at least one data stream is intended to be transmitted, the link being intended to be established between the first and the second unit of communications equipment, **characterized in that** it comprises sending means of a message to the first unit of communications equipment, the message comprising an identifier (IdSB1) of the first base station and an identifier (IdSB2) of the second base station, these identifiers being intended to be extracted by the first unit of communications equipment so as to allow the latter, in anticipation of the handover procedure, to:
- create a first point of attachment in the first unit of communications equipment intended to form the first end of the link,
- determine an identifier of the second point of attachment in the second unit of communications equipment intended to form the second end of the link,
- send a request for establishing the link to the second unit of communications equipment, the request for establishing the link comprising the identifier of the first point of attachment and the identifier of the second point of attachment.

6. A computer program product comprising computer-executable instructions for, implementing the steps of the method for establishing a link as claimed in claim 1, when the program is executed by a processor.

7. Recording medium configured to be read by a unit of switching equipment on which the computer program product as claimed in claim 6 is recorded.

8. A computer program product comprising computer-executable instructions for implementing the steps of the method of communication as claimed in claim 3, when the program is executed by a processor.

9. Recording medium readable by a unit of switching equipment on which the computer program product as claimed in claim 8 is recorded.
